# EUROPÄISCHE PATENTANMELDUNG

(11) **EP 0 987 579 A1**
(43) Veröffentlichungstag der Anmeldung: **22.03.2000**
(21) Anmeldenummer: 99116384.1
(22) Anmeldetag: 20.08.1999
(51) Int. Cl.: G02C 13/00

(54) **Vorrichtung zur Reinigung von Brillengläser**

(30) Priorität: 22.08.1998 DE 19838255
(71) Anmelder: Ostermann, Jörn-Hinrich, 24629 Kisdorf (DE)
(72) Erfinder: Ostermann, Jörn-Hinrich, 24629 Kisdorf (DE)

(57) **Zusammenfassung**

Zur Verbesserung von Reinigungsvorrichtungen für Brillengläser, ist vorgesehen, daß an gegenüberliegenden Schenkeln eines Bügels Reinigungselemente angeordnet sind, die durch Bandmaterial aus Stoff, Flies oder Leder gebildet sind. Das Bandmaterial besitzt hierbei unter Ausbildung eines Steges Einschnitte, um Laschen zu bilden. Hierbei wird eine stirnseitige Fläche unter Bildung einer pinselartigen Oberfläche durch die Laschen beim Zusammenlegen bzw. Aufrollen des Bandmaterials gebildet.

## Beschreibung

Die Erfindung bezieht sich auf eine Vorrichtung zur Reinigung von Brillengläsern, wobei an gegenüberliegenden Schenkeln eines elastischen Bügels Reinigungselemente angeordnet sind und zwischen den Reinigungselementen ein zu reinigendes Brillenglas aufnehmbar ist.

Diese gattungsgemäße Ausbildung ist bereits in unterschiedlichen Ausführungsformen nach der DB 42 07 478 C2, DE-OS 28 40 607 und DB 34 12 558 A1 bekannt.

Bei allen bekannten Anordnungen besteht das Problem, daß die gebildete Reinigungsfläche entsprechend einem üblichen Brillenputztuch nur entsprechend seiner direkten Oberfläche zur Verfügung steht, d.h. die Fläche des Reinigungstellers bestimmt die zur Verfügung stehende Putzfläche. Hierdurch ist die Funktionsfähigkeit der Reinigungsfläche schnell erschöpft, da immer die gleichen Flächenteile bei der Reinigung benutzt werden.

Ferner ist nach der DE-PS 214 509 eine Putzvorrichtung für Brillengläser der gattungsgemäßen Art bekannt geworden, wobei in einem Drehpunkt vereinigte Griffe miteinander zugewandten Aufnahmen an ihren Enden schneckenartig aufgerollte Streifen von Putzleder aufweisen.

Auch nach der WO 96/24878 A1 sind in ähnlicher Weise sogenannte Pads an einander zugewandten Griffenden zum Putzen von Brillengläser angeordnet.

Nach der US 5 363 532 ist abweichend von den bekannten Anordnungen als Taschengeräte, eine Einspannvorrichtung für Brillen vorgeschlagen worden, die mit zusätzlichen Reinigungsutensilien in Form eines Pinsels zur Reinigung versehen ist.

Die Aufgabe der Erfindung ist es, die zur Verfügung gestellte Reinigungsfläche relativ zu vergrößern und die benutzten Flächenteile nach einem Zufallsprinzip bei jeder Benutzung anders zuzuordnen.

Die Lösung dieser Aufgabe erfolgt erfindungsgemäß durch die Merkmalskombination des Anspruches 1.

Durch diese Ausbildung ist eine gute Anpassungfähigkeit an die Krümmung und Randbereiche der Brillengläser gegeben. Ferner kommen bei einer Benutzung immer unterschiedliche Flächenelemente als Laschen mit unterschiedlichen Seiten zur Reinigung der Brillengläser zum Einsatz.

Eine vorteilhafte Ausbildung wird dadurch geschaffen, daß das Bandmaterial spiralförmig aufgerollt ist.

Ferner wird vorgeschlagen, daß am Schenkel des Bügels ein Befestigungselement ausgebildet ist, das als Aufnahme für den Steg des zusammengelegten oder aufgerollten Bandmaterials dient.

Zur einfachen Anordnung bei der Handhabung des Reinigungselementes ist vorgesehen, daß der Steg des Bandmaterials durch einen umfassenden Aufnahmering gehaltert ist.

Eine gute Funktionsfähigkeit wird dadurch erzielt, daß das Bandmaterial über Steg bzw. Aufnahmering in einem Schalenelement mit Griffmulden verschwenkbar aufgenommen ist, wobei das Schalenelement am Schenkel des Bügels gelagert ist.

Um mit einem Reinigungselement eine zweiseitige Benutzung zu ermöglichen, wird vorgeschlagen, daß das Bandmaterial an beiden Außenrandbereichen Einschnitte zur Bildung zungenartiger Laschen aufweist.

In der Zeichnung ist ein Ausführungsbeispiel der Erfindung schematisch dargestellt. Es zeigen:

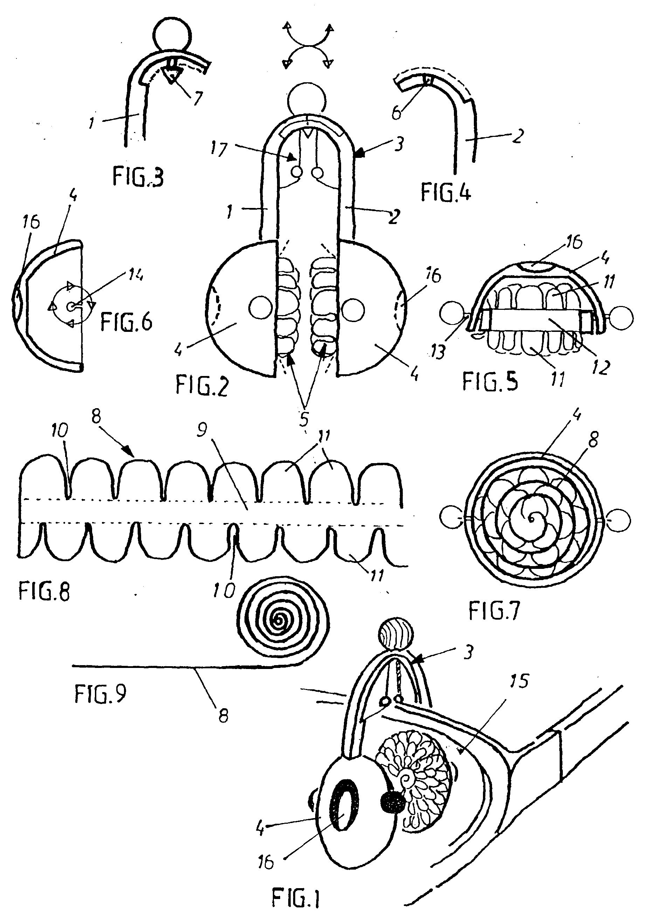

- Fig. 1: eine perspektivische Gesamtdarstellung in Zuordnung eines Brillenglases,
- Fig. 2: eine Seitenansicht einer Vorrichtung,
- Fig. 3 und 4: Schenkelteile zur Ausbildung eines Bügels,
- Fig. 5: einen Schnitt durch ein Schalenelement mit einem Reinigungselement,
- Fig. 6: eine Seitenansicht auf ein Schalenelement,
- Fig. 7: eine Draufsicht auf ein Reinigungselement in einemSchalenelement,
- Fig. 8: aufzurollendes Bandmaterial mit beidseitigen Einschnitten zur Bildung von Laschen **und**
- Fig. 9: sprialförmig aufgewickeltes Bandmaterial.

Bei der dargestellten Anordnung wird durch zwei gegenüberliegende Schenkel 1,2 ein elastischer Bügel 3 gebildet, wobei die Schenkel 1,2 an ihren freien Enden Schalenelemente 4 aufnehmen, die wiederum beweglich zugeordnete Reinigungselemente 5 aufnehmen. Hierzu ist der obere Teil der Schenkel 1,2 korrespondierend ineinandergreifend ausgebildet und über zugeordnete Befestigungselemente als Lochaufnahme 6 und Zapfen 7 miteinander verbindbar.

Im oberen Teil des Bügels 3 ist zusätzlich eine Aufnahmevorrichtung 17 zum Einhängen der Anordnung in ein Kleidungsstück vorgesehen.

Jedes Reinigungselement 5 wird durch Bandmaterial 8 gebildet, das unter Beibehaltung eines Steges 9 Einschnitte 10 zur Bildung zungenartiger Laschen 11 aufweist. Das Bandmaterial 8 wird in diesem Fall spiralförmig aufgewickelt, so daß sich durch den Steg 9 ein fester Kern bildet, der in einen Aufnahmering 12 einsetzbar ist. Das Material wird dabei aus Stoff, Vlies bzw. Leder gebildet.

Der in dieser Weise bestückte Aufnahmering 12 wird über seitliche Befestigungselemente 13 in zugeordnete Schlitze 14 des Schalenelementes 4 eingesetzt,, das jeweils an jedem Ende der Schenkel 1,2 angeordnet ist.

Die auf diese Weise gebildeten Reinigungsflächen durch die zungenartigen Laschen 11 werden beiderseitig dem Brillenglas 15 zugeordnet, wobei der Druck auf die Flächen durch entsprechende Griffmulden 16 an den Schalenelementen 4 verstärkbar ist.

Durch die beidseitige Ausbildung von Laschen 11 ist es möglich, beide Seiten des eigentlichen Putzteils des Reinigungselementes 5 zu verwenden. Dieses Putzteil wird hierzu um 180 Grad in den Schalenelement 4 verschwenkt.

## Patentansprüche

1. Vorrichtung zur Reinigung von Brillengläsern, wobei an gegenüberliegenden Schenkeln eines elastischen Bügels Reinigungselemente angeordnet sind und zwischen den Reinigungselementen ein zu reinigendes Brillenglas aufnehmbar ist, wobei jedes Reinigungselement (5) durch Bandmaterial (8) aus Stoff, Vlies oder Leder gebildet ist, das mindestens an einem seiner beiden langen Randbereiche unter Bildung eines Steges (9) Einschnitte (10) zur Bildung zungenartiger Laschen (11) aufweist und das derart zusammengelegt oder aufgerollt ist, daß die zungenartigen Laschen auf mindestens einer Stirnfläche des Reinigungselements angeordnet sind und dort eine pinselartige Struktur bilden.

2. Vorrichtung nach Anspruch 1, dadurch gekennzeichnet, daß das Bandmaterial (8) spiralförmig aufgerollt ist.

3. Vorrichtung nach Anspruch 1 oder 2, dadurch gekennzeichnet, daß am Schenkel (1,2) des Bügels (3) ein Befestigungselement (4) ausgebildet ist, das als Aufnahme für den Steg (9) des zusammengelegten oder aufgerollten Bandmaterials (8) dient.

4. Vorrichtung nach einem der Ansprüche 1 bis 3, dadurch gekennzeichnet, daß der Steg (9) des Bandmaterials (8) durch einen umfassenden Aufnahmering (10) gehaltert ist.

5. Vorrichtung nach einem der Ansprüche 1 bis 4, dadurch gekennzeichnet, daß das Bandmaterial (8) über Steg (9) bzw. Aufnahmering (10) in einem Schalenelement (4) mit Griffmulden (16) verschwenkbar aufgenommen ist, wobei das Schalenelement (4) am Schenkel (1,2) des Bügels (3) gelagert ist.

6. Vorrichtung nach einem der Ansprüche 1 bis 5, dadurch gekennzeichnet, daß das Bandmaterial (8) an beiden Außenrandbereichen Einschnitte (10) zur Bildung zungenartiger Laschen (11) aufweist.
